Europäisches Patentamt

European Patent Office

Office européen des brevets

(11) Publication number: **0 189 590 B1**

## EUROPEAN PATENT SPECIFICATION

(45) Date of publication of patent specification: **25.09.91**  (51) Int. Cl.⁵: **G06K 11/06, G02F 1/01, G02F 1/13, G06F 3/033**

(21) Application number: **85116533.2**

(22) Date of filing: **23.12.85**

(54) Input and display apparatus for a digitizing tablet.

(30) Priority: **28.12.84 US 687070**

(43) Date of publication of application:
**06.08.86 Bulletin 86/32**

(45) Publication of the grant of the patent:
**25.09.91 Bulletin 91/39**

(84) Designated Contracting States:
**BE DE FR GB**

(56) References cited:
**EP-A- 0 066 965**
**US-A- 4 017 848**
**US-A- 4 224 615**
**US-A- 4 345 248**

(73) Proprietor: **WANG LABORATORIES INC.**
**One Industrial Avenue**
**Lowell, MA 01851(US)**

(72) Inventor: **Johnston, James Patrick**
**6 Rail Terrace**
**Westford, MA 01886(US)**
Inventor: **Russel, Donald L.**
**15 Reid Road**
**Chelmsford, MA 01824(US)**

(74) Representative: **Behrens, Dieter, Dr.-Ing. et al**
**Wuesthoff & Wuesthoff Patent- und Recht-**
**sanwälte Schweigerstrasse 2**
**W-8000 München 90(DE)**

## Description

This invention relates to entering information into, and displaying information from a data processor.

One device for displaying such information is the well-known liquid crystal display (LCD) which has a special liquid crystal material held between two parallel glass faces. The liquid crystal material temporarily changes its molecular structure, and thus its appearance, when subjected to an electrical field. Appropriately shaped transparent electrodes printed on the glass faces establish such an electrical field in the liquid crystal material to form a desired image, such as numbers representing the time of day.

One device for entering information into a data processor is a touch pad on which the user "writes" either with his finger, a pen, or a special purpose stylus. Corresponding electrical signals are generated by one of several techniques, including electromagnetic induction, variable capacitance, make-and-break switching, or grids of parallel infrared beams. Some touch pads have soft membrane surfaces which must be depressed to be activated.

The computer may be arranged so that whatever is "written" on the pad is immediately displayed back to the user on the computer's CRT display.

Another data entry technique is the light pen which senses the time at which light appears at a selected spot on a scanned display screen as an indication of the location of the spot.

In US patent specification 4 345 248 a liquid crystal display panel is described which has a matrix configuration, whereby data can be written in, via the display panel to data processing circuitry, connected to the display panel, and immediately displayed at the input location. At each intersection of the row and column electrodes of the display panel, i.e. at each of the display elements, a photoelectric element is provided. These element are sequentially scanned to detect whether a signal has been applied to the photoelectric elements from a light source, such as a light pen.

Prior art is also a liquid crystal display device (touch pad) for receiving input data from a human operator, which may be used as a computer input keyboard (US patent specification 4 224 615). A plurality of segments is formed on the substrate of the LCD device between a transparent, resilient front plate and a rear plate. If pressure is applied via the front plate, such as by means of the operator's finger, to a group of segments in one of a plurality of defined areas a change in capacitance between the segments disposed on the substrate and the segments disposed on the front plate occurs. This change is scanned and processed to generate an input data signal for a computer. The visual representation format of numbers, symbols or characters in the defined areas is, however, independent of the application of pressure. It may be "updated" or reshaped to create a "new" touch pad.

An object of the invention as defined in the appended independent claim I is the provision of an apparatus for both entering input information into and displaying output information from a data processor without resorting to light stimulation and a photoelectric layer incorporated in the liquid crystal display layer.

The apparatus has in common with prior art a resilient writing surface for receiving writing stimuli through depression (touch pad) as well as imaging means including a plurality of elements comprising a medium each with a visual characteristic which depends on electrical stimulation of the element and is visible at the writing surface, and including conductive means arranged to deliver electrical stimulation to the elements. The imaging means is arranged to produce electrical manifestations at the conductive means in response to writing stimuli. The apparatus also includes circuitry for delivering electrical signals to the conductive means to form an image of the output information visible at the writing surface and for converting the electrical manifestations to a digital form representative of the input information.

In order to achieve this object the elements of the imaging means comprise a medium which is a liquid crystalline material contained between the writing surface and a support layer parallel to and spaced from the writing surface that also produces changes of conductance in response to depressing of the writing surface; the conductive means includes a pair of electrodes associated with each element in such a way that the electrical manifestations correspond to changes in conductance of the element resulting from the stimuli; the writing surface is a resilient layer which is written on at locations corresponding to the input information; the conductive means includes sets of row conductors and column conductors which intersect to define locations corresponding to the elements; the circuitry includes driver circuitry which scans the row and column conductors to form the image and sensor circuitry which senses the electrical manifestations; and the apparatus also includes control circuitry for interlacing the operation of the driver and sensor circuitries.

Preferred further developments are defined in the appended dependent claims.

The invention permits entering information and viewing an image at the same location of the writing surface. The device is thin enough to sit conveniently on a desk top. Information can be entered and displayed at the same time without flickering of the image.

A preferred embodiment is described with the aid of a drawing, in which shows:

Fig. 1:    an isometric view of a touch pad, partially broken away,

Fig. 2:    an enlarged cross-sectional view (at 2-2 in Fig. 1) of the pad sandwich of the pad of Fig. 1, not to scale,

Fig. 3:    an equivalent circuit diagram corresponding to a representative portion of the pad sandwich and related electronics and

Fig. 4:    a block diagram of the control circuitry of Fig. 3.

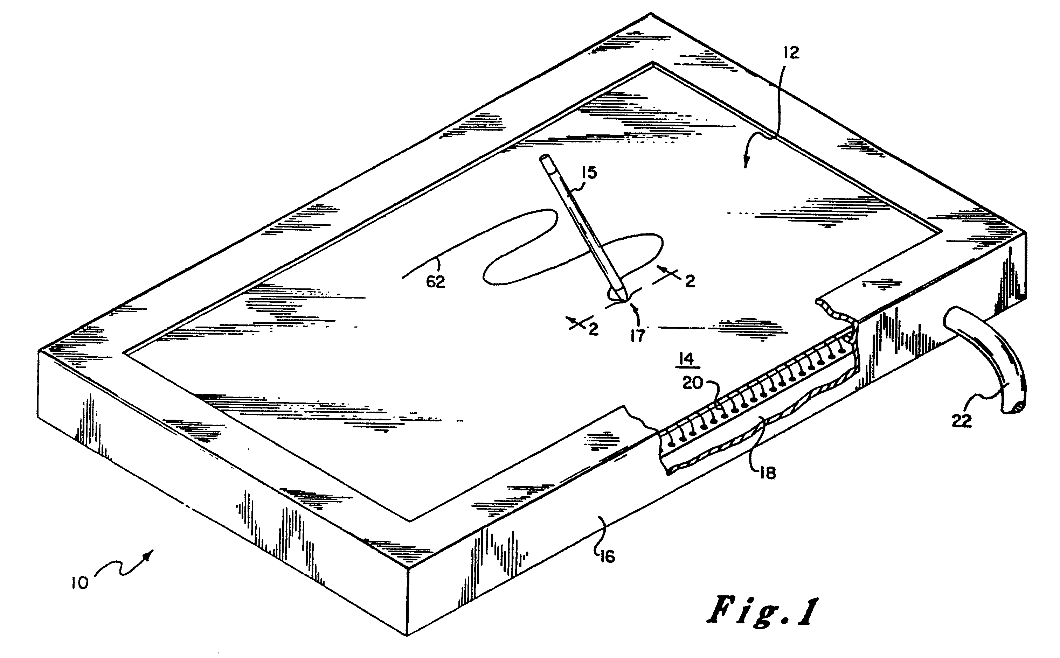

Referring to Fig. 1, touch pad 10 has a large (e.g., 216 mm x 280 mm or 8 1/2" x 11") exposed resilient writing surface 12 for writing with a finger or stylus 15.

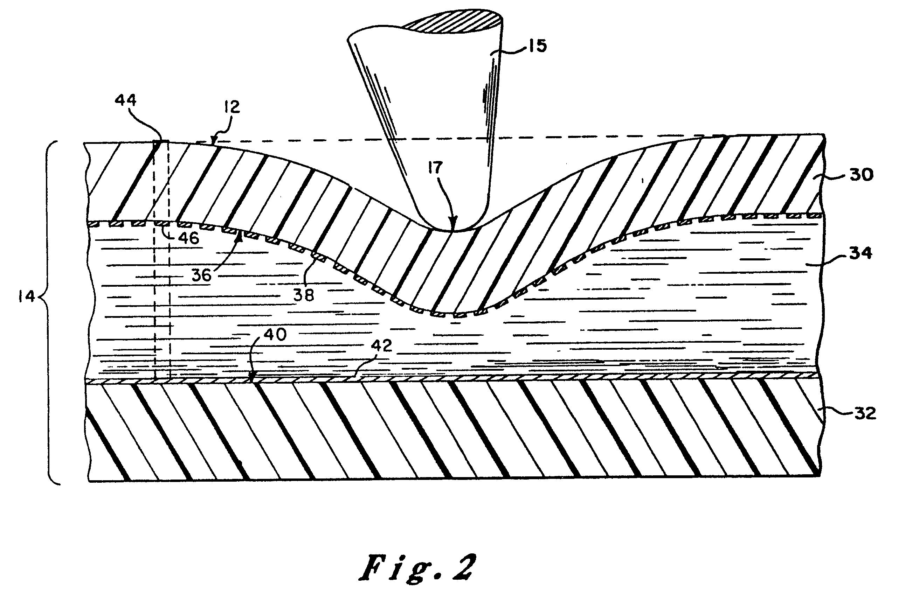

Referring to Fig. 2, surface 12 is part of a pad sandwich 14 which includes a flexible, resilient, transparent plastic upper layer 30 spaced apart (e.g., with a spacing of 5 microns) from and parallel to a flexible plastic lower layer 32 to define a cavity 34 between them. A conventional liquid crystal material is held within the cavity by sealing together the upper and lower layers 30, 32 along the peripheral edges of sandwich 14 (not shown). The flexibility and resilience of layer 30 are such that pressing at a point on the surface (e.g., 17) will deform layer 30 in a localized region at the point of pressure, with the deformed region returning to its original position after the pressing stops. Layers 30, 32 are kept spaced apart either by a matrix of resilient supporting pillars inserted between them or by selection of a liquid crystal material having appropriate physical characteristics.

The bottom surface 36 of upper layer 30 is imprinted (by conventional thin-film technology) with series of closely spaced (e.g., with a spacing of 75 $\mu$m or 0.005"), parallel, transparent, conductors 38 of a kind conventionally used in LCD displays. The top surface 40 of lower layer 32 is likewise imprinted with a series of closely spaced (e.g., with a spacing of 250 $\mu$m or 0.010"), parallel, transparent conductors 42. Only one conductor 42 appears on Fig. 2. Conductors 42 run along the length of pad 10 and conductors 38 along its width, thus forming a grid defining a matrix of pixels (display elements) on surface 12, each pixel being defined by the intersecting pair of conductors 38, 42 which underlie that pixel. For example, pixel 44 is defined by a particular conductor 46 of the conductors 38, and a particular one of the conductors 42.

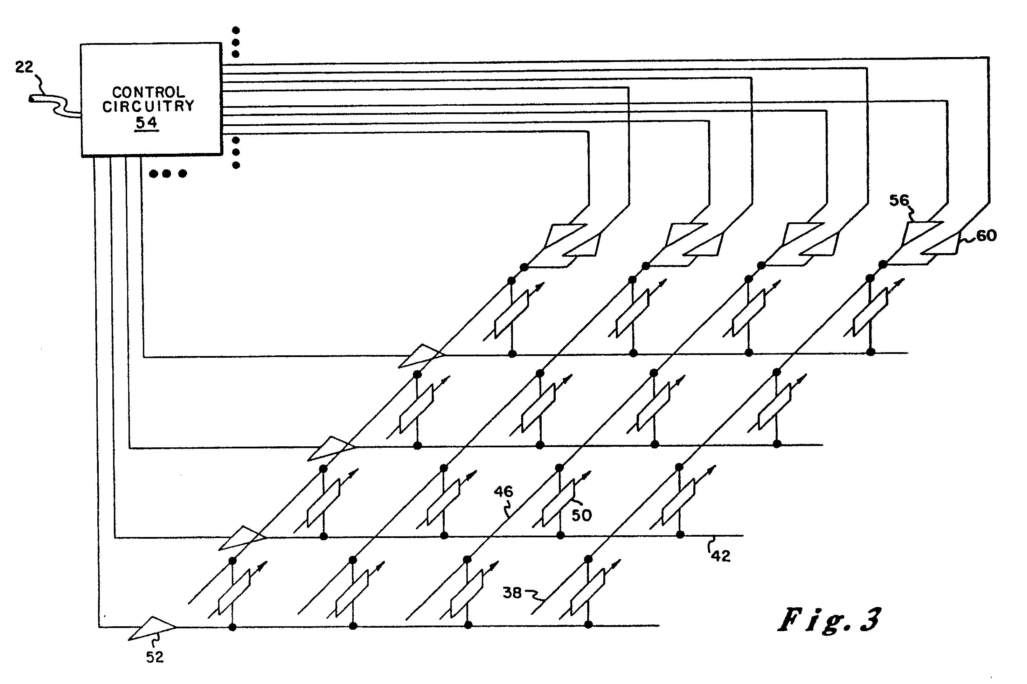

Referring to Fig. 3, conductors 42 can be viewed as forming rows and conductors 38 as forming columns in a equivalent circuit diagram. At each pixel location is shown an imaginary discrete circuit element 50 which represents the electrical characteristic of a localized path between the particular row and column conductors 38, 42, associated with that pixel. The electrical characteristic of each such element 50 is indicated (by means of an arrow) as variable to reflect the fact that when surface 12 is depressed at a pixel location, the resulting local physical deformation of layer 30 with respect to layer 32 will produce a change in the electrical characteristic. For example, the resulting localized reduction in distance between layers 30, 32 may increase the capacitance or decrease the resistance (or a combination of the two) between the associated top and bottom conductors 38, 42 depending on the materials and physical construction of pad 10. Whatever its precise character, the electrical change in the local path between conductors 38, 42 may be called a change in conductance.

For information display purposes, each row conductor 42 is connected to a conventional source driver 52 (e.g., type HD44780 or HD44100 available from Hitachi) for feeding current to the conductor. The source drivers 52 are all connected to control circuitry 54 for selectively triggering appropriate ones of the drivers 52. Control circuitry 54 is also connected to a set of conventional sink display drivers 56 (e.g., type HD44100H or HD44780 available from Hitachi). Each sink display driver 56 is in turn connected to one of the column conductors 38 for sinking current from the corresponding conductor when triggered by control circuitry 54.

For information input purposes, control circuitry 54 is also connected to a set of input sensors 60 (e.g. type MC14049UB available from Motorola). Each input sensor 60 is in turn connected to one of the column conductors 38 for sensing an electrical value related to the conductance of various ones of the elements 50 connected to the conductor, such conductances being indicative of which elements 50 are being subjected to pressure. Each sensor 60 can be of the type having CMOS inverter gates which detect whether the sensed voltage appearing across an element 50 as a result of the pressure of stylus 15 is greater than a threshold voltage of the gate. Each sensor 60 also includes a voltage comparator circuit (e.g., type A3302 available from Fairchild) for allowing the detection of differential voltage levels, for a purpose discussed below.

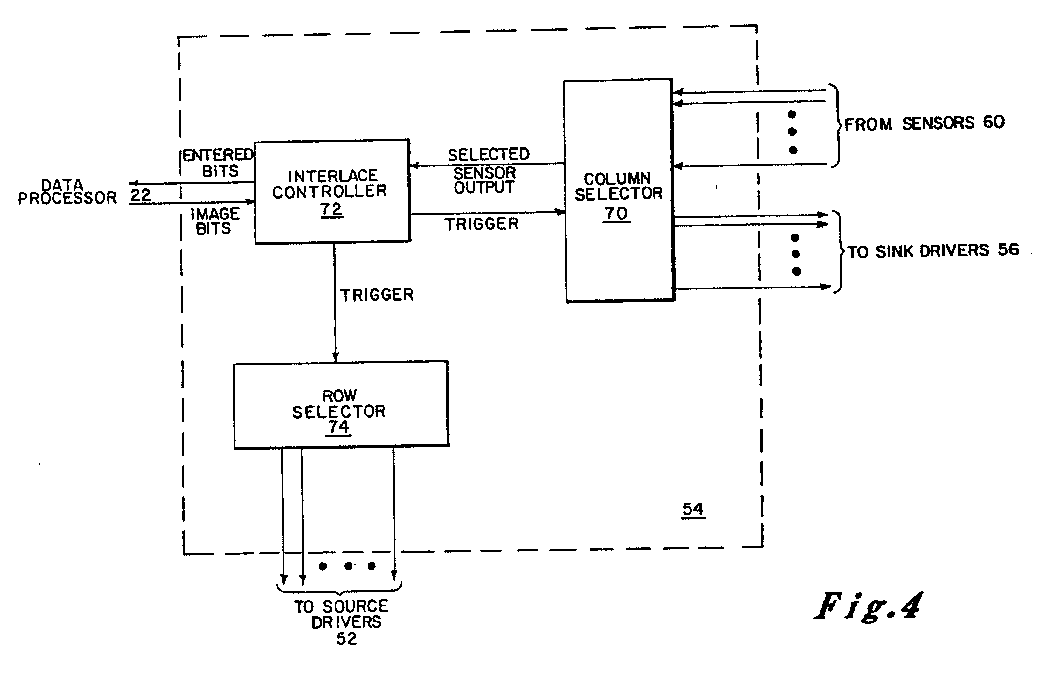

Referring to Fig. 4, control circuitry 54 includes a column selector which accepts bits from particular sensors 60 (indicating which elements 50 are being subjected to pressure) and delivers display bits to sink drivers 56 (corresponding to an image to be displayed) as dictated by trigger signals provided from an interlace controller 72. Any output bit from a selected sensor 60 is passed from column selector 70 back to controller 72. Control circuitry 54 also includes a row selector 74 which delivers display bits to source drivers 52 likewise based on trigger signals from controller 72. Controller 72 interleaves the displaying of pixels of an image specified by the data processor with the reading of entered information which is passed back to the data processor, all via line 22.

Referring again to Fig. 1, the source drivers 52, sink display drivers 56, control circuitry 54, and sensors 60 are all included in electronic circuitry 18, mounted in housing 16. Conductors 38 and 42 are connected via leads 20 to circuitry 18.

A cable 22 enables control circuitry 54 to send and receive information bits to and from the data processor, corresponding to pixels which are to be displayed or input information which is to be read.

The pad is capable of both displaying output information from a data processor and receiving input information represented by pressure of stylus 15 at various points on surface 12 (e.g., the points along a line 62, Fig. 1).

Displaying an image is accomplished in the conventional way for LCDs. Bach of the pixels corresponding to the output information is darkened by establishing an electrical field across the liquid crystal material between the two conductors associated with that pixel. The field is established by triggering the corresponding source and sink drivers 52, 56. The field temporarily alters the molecular alignment of the liquid crystal material at the pixel, causing it to appear darker. An entire image is generated by rapidly triggering in succession (that is, scanning) the appropriate sink display drivers 56 while one of the source drivers 52 is triggered, then repeating the process while another one of the source drivers is triggered, and so on. By repeating the scanning process (refreshing the image) at a high rate of repetition, the image is seen without interruption.

Because the number of pixels defined by conductors 38, 42 is large, the time required to refresh a displayed image is likely to be long. Furthermore, the refresh cycles must follow each other with little intervening dead time to produce a flicker-free image. As a result, insufficient time may be available between refresh cycles to completely scan all elements 50 to determine which, if any, are being subjected to pressure by stylus 15. Instead controller 72 concurrently interlaces the displaying of pixels 44 with the reading of elements 50 in order to accomplish both in about the same time that would otherwise be required for displaying alone.

The concurrent interlacing is accomplished as follows. First a given row conductor 42 is activated by triggering the corresponding driver 52. While that row conductor 42 is activated, each sensor 60 is triggered in turn to read the elements 50 along row conductor 42. If a pixel 44 is also to be displayed at the same intersection between the active row conductor 42, and the column conductor 38 associated with the triggered sensor 60, then the corresponding sink driver 56 is triggered at the same time; if that pixel is not to be displayed, that corresponding sink driver is not triggered. Sensor 60 is arranged to sense pressure at the element 50 corresponding to that pixel whether or not that pixel is simultaneously being displayed. If that pixel is being displayed, the field used to cause the display may itself induce changes in the conductance of the corresponding element 50 similar to the changes produced by pressure on that element. In that case, the output of the source driver 52 is then used as an input to the voltage comparator circuit of sensor 60 to offset the effect of the drive voltage, thus permitting the sensor to detect that element 50 is being pressed.

Once all elements 50 have been scanned, the cycle is repeated.

The displayed information can be the same as, or different from, the input information. When the displayed and input information are the same, the pad allows the user to see immediately on the pad what he has just written. The device is thin enough to sit conveniently on a desk top with the writing surface facing up. Information can be entered and displayed at the same time without flickering of the image.

Other embodiments are within the following claims.

For example, the interlacing can be accomplished by an offset technique in which the triggered sensor 60 is in the adjacent column to the column in which the sink driver 56 is potentially triggered. In that case, the sensors 60 will always be sensing elements 50 corresponding to undisplayed pixels. However, the total scanning time required for both image displaying and reading will be one column longer in duration for each row scanned because of the offsetting of the reading and displaying operations.

The multiple sensors 60 could be replaced by a single sensor connected via a multiplexing switch (e.g., type MC14051B available from Motorola) to each of the columns to be sensed. The multiplexing switch would then be controlled by control circuitry 54.

## Claims

1. Apparatus for entering input information and displaying thereafter output information from a data processor, which includes

   a writing surface (12) on which writing stimuli (15) are applied at locations corresponding to said input information,

means for generating signals representative of the input information,

a plurality of elements (50) associated with said writing surface (12) defined by a grid of conductive means (38, 42) to which electrical signals may be applied each element comprising a medium (34) which is a liquid crystal material and exhibits an optical characteristic in response to electrical stimulation by said electrical signals, said optical characteristic being visible at said writing surface, and

control circuitry (54) for converting said electrical signals to a digital form representative of said input information and for delivering electrical signals for stimulation of the elements by way of said conductive means to form a visible image of said output information at the location of writing stimulation of the writing surface,
characterized by:

a medium (34) that also produces changes of conductance in response to depressing of that writing surface (12), said changes of conductance being sensed through said grid of conductive means (38, 42),

the control circuit (54) converting said sensed changes of conductance to electrical signals to be further processed and displayed.

2. The apparatus according to claim 1
further characterized in that
an imaging means (14) associated with a writing surface (12) for receiving writing stimuli, and having conductive elements (38, 42) arranged to deliver electrical stimulation to one or more of a plurality of elements (50) each having a visual characteristic which depends upon the electrical stimulation of the element and is visible at the writing surface (12), and the said imaging means (14) further being arranged to produce electrical manifestations at the conductive means (38, 42) in response to a writing stimuli.

3. The apparatus according to claim 1 or 2
further characterized by
a voltage comparator circuit for selectively sensing the presence of any writing stimuli at the conductive means (38, 42) at locations associated with the writing surface (12) by sensing capacitive differential across the conductive means (38, 42) at locations wherein writing stimuli is imposed, and source driver elements (52), operable for delivering electrical signals to the conductive means (38, 42) to form an image of the output information visible at the writing surface (12).

4. The apparatus according to any one of claims 1 to 3
further characterized in that
the control circuitry (54) selectively senses the presence of writing stimuli at locations wherein elements (50) are provided with electrical stimulation in order to produce a display visible at the writing surface (12) by providing the output of the source driver (52) associated with the corresponding conductive means (38, 42) to the voltage comparator circuit.

5. The apparatus according to any one of claims 1 to 4
further characterized in that
the control circuitry (54) selectively senses the presence of writing stimuli at locations adjacent to locations wherein elements (50) are provided with electrical stimulation in order to produce a display visible at the writing surface (12) by providing the output of the source driver (52) associated with the corresponding conductive means (38, 42) to the voltage comparator circuit.

**Revendications**

1. Appareil pour entrer une information d'entrée et pour afficher après une information de sortie d'un processeur de données, ledit appareil comprenant

une surface d'écriture (12) à laquelle des stimuli d'écriture sont appliqués dans des endroits correspondant à ladite information d'entrée,

un moyen pour générer des signaux représentant l'information d'entrée,

un nombre d'éléments (50), associés à la surface d'écriture (12), définis par un treillis d'organes conducteurs (38, 42), auxquels des signaux électriques peuvent être appliqués, chacun des éléments comprenant un milieu (34) qui est un matériau de cristal liquide et montre une caractéristique optique en réponse à une stimulation électrique par lesdits signaux électriques, ladite caractéristique optique étant visible à ladite surface d'écriture, et

un circuit de commande (54) destiné à convertir lesdits signaux électriques en une forme numérique représentant ladite information d'entrée, et à délivrer des signaux électriques en vue de la stimulation des éléments au moyen desdits organes conducteurs, de manière à former une image visible de ladite information de sortie à l'endroit de la stimulation d'écriture de la surface d'écriture,
caractérisé par

un milieu (34) qui produit également des variations de conductance en réponse à un enfoncement de ladite surface d'écriture (12), lesdites variations de conductance étant détectées au moyen dudit treillis d'organes conducteurs (38, 42),

le circuit de commande (54) convertissant les variations de conductance détectées en des signaux électriques à traiter ultérieurement et à afficher.

2. Appareil selon la revendication 1,
en outre caractérisé en ce que
un moyen de formation d'images (14) est associé à une surface d'écriture (12) pour recevoir des stimuli d'écriture, et comprend des organes conducteurs (38, 42) disposés de manière à envoyer une stimulation électrique à un ou à plusieurs éléments parmi le nombre d'éléments (50) dont chacun possède une caractéristique visuelle qui dépend de la stimulation électrique de l'élément et est visible à la surface d'écriture (12), et en ce que ledit moyen de formation d'images (14) est en outre disposé de manière à produire des manifestations électriques sur les organes conducteurs (38, 42) en réponse à des stimuli d'écriture.

3. Appareil selon la revendication 1 ou 2,
en outre caractérisé par
un circuit de comparaison de tensions destiné à détecter sélectivement la présence de stimuli d'écriture sur les organes conducteurs (38, 42) dans des endroits associés à la surface d'écriture (12), et ce en détectant des différences de capacité sur les organes conducteurs (38, 42) dans des endroits où des stimuli d'écriture sont appliqués, et par des éléments d'attaque de source (52), capable d'être opérés pour délivrer des signaux électriques aux organes conducteurs (38, 42), de manière à former une image de l'information de sortie, visible à la surface d'écriture (12).

4. Appareil selon l'une quelconque des revendications 1 à 3,
en outre caractérisé en ce que
le circuit de commande (54) détecte sélectivement la présence de stimuli d'écriture dans des endroits où des éléments (50) reçoivent une stimulation électrique, afin de produire une affiche visible à la surface d'écriture (12) en envoyant la sortie de l'étage d'attaque de source (52) qui est associé aux organes conducteurs (38, 42) correspondants, au circuit de comparaison de tension.

5. Appareil selon l'une quelconque des revendications 1 à 4,

en outre caractérisé en ce que
le circuit de commande (54) détecte sélectivement la présence de stimuli d'écriture dans des endroits adjacents aux endroits où des éléments (50) reçoivent une stimulation électrique, afin de produire une affiche visible à la surface d'écriture (12) en envoyant la sortie de l'étage d'attaque de source (52) qui est associé aux organes conducteurs (38, 42) correspondants, au circuit de comparaison de tension.

**Patentansprüche**

1. Vorrichtung zur Eingabe von Eingangsinformationen und danach zur Anzeige von Ausgangsinformationen von einem Datenprozessor, mit
einer Schreibfläche (12), an die Schreibstimuli (15) an Stellen angelegt werden, die den Eingangsinformationen entsprechen,
einer Einrichtung zum Generieren von die Eingangsinformationen darstellenden Signalen,
einer Vielzahl der Schreibfläche (12) zugeordneter Elemente (50), die von einem Gitter elektrisch leitfähiger Bauteile (38, 42) definiert sind und denen elektrische Signale zugeführt werden können, wobei jedes Element ein Medium (34) aufweist, das ein Flüssigkristallwerkstoff ist und bei elektrischer Stimulierung durch die genannten elektrischen Signale eine optische Eigenschaft zeigt, die auf der Schreibfläche sichtbar ist, und
einer Steuerschaltungsanordnung (54) zum Umwandeln der elektrischen Signale in eine die genannten Eigangsinformationen darstellende digitale Form und zur Abgabe von elektrischen Signalen zum Stimulieren der Elemente über die elektrisch leitfähigen Bauteile, derart, daß ein sichtbares Abbild der Ausgangsinformationen am Ort der Schreibstimulierung der Schreibfläche ausbildbar ist,
gekennzeichnet durch:
ein Medium (34), das in Abhängigkeit vom Niederdrücken der Schreibfläche (12) auch Änderungen des Wirkleitwertes erzeugt, die über das Gitter von elektrisch leitfähigen Bauteilen (38, 42) erfaßt werden,
die Steuerschaltungsanordnung (54) die erfaßten Wirkleitwertänderungen in weiterzuverarbeitende und anzuzeigende elektrische Signale umwandelt.

2. Vorrichtung nach Anspruch 1,
ferner dadurch gekennzeichnet, daß
eine bildgebende Einrichtung (14) einer Schreibfläche (12) zur Aufnahme von Schreibstimuli zugeordnet ist und elektrisch leitfähige Bauteile (38,42) aufweist, die so angeordnet sind, daß sie ein oder mehrere aus einer Vielzahl von Elementen (50) elektrisch stimulieren, welche je eine optische Eigenschaft besitzen, die von der elektrischen Stimulierung des Elementes abhängig und an der Schreibfläche (12) sichtbar ist, und die bildgebende Einrichtung (14) ferner so ausgebildet ist, daß sie in Abhängigkeit von Schreibstimuli an den elektrisch leitfähigen Bauteilen (38, 42) elektrische Anzeichen erzeugt.

3. Vorrichtung nach Anspruch 1 oder 2 ferner gekennzeichnet durch eine Spannungsvergleicherschaltung zum selektiven Erfassen des Vorhandenseins von Schreibstimuli an den elektrisch leitfähigen Bauteilen (38, 42) an der Schreibfläche (12) zugeordneten Stellen durch Feststellen von Kapazitätsunterschieden an den elektrisch leitfähigen Bauteilen (38, 42) an Stellen, an denen Schreibstimuli angelegt sind, und durch Quellentreiberelemente (52), die zur Abgabe von elektrischen Signalen an die elektrisch leitfähigen Bauteile (38,42) in der Weise betätigbar sind, daß ein an der Schreibfläche (12) sichtbares Abbild der Ausgangsinformation erzeugt wird.

4. Vorrichtung nach einem der Ansprüche 1 bis 3, ferner dadurch gekennzeichnet, daß die Steuerschaltungsanordnung (54) selektiv das Vorhandensein von Schreibstimuli an Stellen erfaßt, wo Elemente (50) elektrisch stimuliert werden, um eine an der Schreibfläche (12) sichtbare Anzeige durch Weiterleiten des Ausgangs des Quellentreibers (52), der den entsprechenden elektrischen leitfähigen Bauteilen (38,42) zugeordnet ist, an die Spannungsvergleicherschaltung zu erzeugen.

5. Vorrichtung nach einem der Ansprüche 1 bis 4, ferner dadurch gekennzeichnet, daß die Steuerschaltungsanordnung (54) selektiv das Vorhandensein von Schreibstimuli an Stellen nahe den Stellen erfaßt, wo Elemente (50) elektrisch stimuliert werden, um eine an der Schreibfläche (12) sichtbare Anzeige durch Weiterleiten des Ausgangs des Quellentreibers (52), der den entsprechenden elektrisch leitfähigen Bauteilen (38, 42) zugeordnet ist, an die Spannungsvergleicherschaltung zu erzeugen.

*Fig.1*

Fig. 2

EP 0 189 590 B1

*Fig. 3*

Fig.4

EP 0 189 590 B1